# EUROPEAN PATENT SPECIFICATION

(11) **EP 2 203 095 B1**
(45) Date of publication and mention of the grant of the patent: **13.08.2014**
(21) Application number: 08837783.3
(22) Date of filing: 12.10.2008
(51) Int. Cl.: A47J 31/40, A47J 31/44

(54) **STEAM MECHANISM INCORPORATED WITHIN KITCHENWARE WATER HEATING SYSTEMS**
WASSERERWÄRMUNGSSYSTEME MIT INTEGRIERTEM DAMPFMECHANISMUS FÜR KÜCHENGERÄTE
MÉCANISME GÉNÉRATEUR DE VAPEUR INCORPORÉ DANS DES SYSTÈMES DE CHAUFFAGE D'EAU D'USTENSILES DE CUISINE

(30) Priority: 10.10.2007 US 978841 P
(43) Date of publication of application: 07.07.2010
(73) Proprietor: Menashes, David, 33112 Haifa (IL)
(72) Inventor: Menashes, David, 33112 Haifa (IL)
(74) Representative: Beck & Rössig European Patent Attorneys
(86) International application number: PCT/IL2008/001353
(87) International publication number: WO 2009/047772

(56) References cited:
- US-A- 4 498 375
- US-A- 5 337 652
- US-A- 5 778 765
- US-A1- 2007 175 336

## Description

### FIELD OF THE INVENTION

The present invention relates to kitchenware. More particularly, the present invention relates to a heating system for boiling water provided with steam exertion mechanism designed especially for creaming milk.

### BACKGROUND OF THE INVENTION

There are existing devices that are capable of generating steam for drinks preparation such as espresso machines. Espresso machines are expensive and large and are dedicated only to a certain function. As a result, they are mostly used in commercial settings. An espresso machine having the features of the preamble portion of claim 1 is known from US 5,778,765 A.

Other very simple devices that are dedicated to creaming milk are available in which the device is basically similar to an egg beater. However, the creaming action is not so effective and the cream is of fairly low quality.

There were several attempts to provide a steamer that is attached to water heating systems. As an example, an attachment for a domestic water kettle is described in patent DE3702956. Another related prior art - patent DE19857165 - teaches a system for preparing hot drinks with a heated water vessel and a transfer pipe leading to the filter unit of a drink reservoir that has a separated boiling chamber in the base of the water vessel. PCT application published as WO2004026088 describes a device for preparing hot beverages. The device comprises a water container which is located on a first base plate and has a heating device for heating the water in the container, a filter unit for receiving ground coffee or tea leaves, elements for conveying water from the water container to the filter unit, a second heating device for heating the water to be conveyed, and a receiving pot. Those attempts to use the action of water boiling in order to form steam were made in systems such as coffee makers that require a substantially cumbersome solution.

There is a need for a simple and relatively small kitchenware water heating system having a mechanism that generates steam.

### SUMMARY OF THE INVENTION

It is an object of the present invention to provide exertion mechanisms for generating steam incorporated within a water heating system such as a kettle or a coffee maker that provide hot water. The steam is used for creaming milk in drink preparations such as coffee.

Therefore, it is provided in accordance with the present invention, a steam generating mechanism incorporated within a water heating system having a body, at least one heating element, on/off switch and power supply, the steam generating mechanism comprising:
a hollow tube having a first side and a second side provided close to the at least one heating element;
a one way valve connected to said first side, wherein said one way valve allows water to enter into said hollow tube;
a one directional pump connected to said second side, wherein the pump is capable of discharging steam generated within said hollow tube;
a pipe fluidically connected to said one directional pump wherein said pipe passes through the body for discharging said steam outwardly.

Furthermore and in accordance with a preferred embodiment of the present invention, said one directional pump is provided with protection release valve.

Furthermore and in accordance with another preferred embodiment of the present invention, one of the at least one heating element is a dedicated heating element for the steam generated mechanism and is adjacent to said hollow tube.

Furthermore and in accordance with another preferred embodiment of the present invention, said pipe is connected to a spout for discharging steam.

Furthermore and in accordance with another preferred embodiment of the present invention, said spout is connected to said pipe through a hinge and wherein said spout can be inserted within a dent in the body and being rotated outwardly.

Furthermore and in accordance with another preferred embodiment of the present invention, said one direction pump can work in pulses.

Furthermore and in accordance with another preferred embodiment of the present invention, the mechanism further comprises a protecting thermostats-based mechanism.

Furthermore and in accordance with another preferred embodiment of the present invention, said protecting thermostats-based mechanism provides three functions: (i) security function in which the system is disconnected from electricity, (ii) keeping water temperature in said hollow tube at about 95 degrees Celsius when the water heating system is in use, and (iii) keeping water temperature in said hollow tube at about 99 degrees Celsius.

Furthermore and in accordance with another preferred embodiment of the present invention, the mechanism further comprises at least one indicator.

Furthermore and in accordance with another preferred embodiment of the present invention, one of said at least one indicator provides a first function in which the water heating system and/or the steam generating mechanism is turned of/on and a second function in which a light indicates when steam is available in said hollow tube.

Furthermore and in accordance with another preferred embodiment of the present invention, the water heating system can be a system such as a kettle for warming water, a coffee maker, or a water heating urn.

### BRIEF DESCRIPTION OF THE FIGURES

Some embodiments of the invention are herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
- Figure 1: illustrates an exploded view of a kettle provided with an adjunct steam generation and exertion mechanism in accordance with a preferred embodiment of the present invention.
- Figures 2a-b: illustrate an exploded view of coffee maker provided with an adjunct steam generation and exertion mechanism in accordance with a yet another embodiment of the present invention.

### DETAILED DESCRIPTION OF PREFERRED EMBODIMENTS

The present invention provides a water heating system incorporated with steam exerting mechanism. In accordance with one aspect of the present invention, an improved kettle is provided with a steam exerting system wherein the steam is built within the kettle and uses the regular water heater that is provided within the kettle. In accordance with another aspect of the present invention, the steam exerting system is provided within a kettle; however, it is provided with a dedicated heater.

The present invention allows the user to produce steam for purpose of creaming milk, as an example. The present invention takes advantage of the regular features of a kettle in order to produce steam and use the kettle for additional purposes.

Before explaining at least one embodiment of the invention in detail, it is to be understood that the invention is not necessarily limited in its application to the details set forth in the following description or exemplified by the Examples. The invention is capable of other embodiments or of being practiced or carried out in various ways.

The terms "comprises", "comprising", "includes", "including", and "having" together with their conjugates mean "including but not limited to".

The term "consisting of" has the same meaning as "including and limited to".

The term "consisting essentially of" means that the structure may include additional parts, but only if the additional parts do not materially alter the basic and novel characteristics of the claimed structure.

As used herein, the singular form "a", "an" and "the" include plural references unless the context clearly dictates otherwise.

In discussion of the various figures described herein below, like numbers refer to like parts. The drawings are generally not to scale. For clarity, non-essential elements were omitted from some of the drawing.

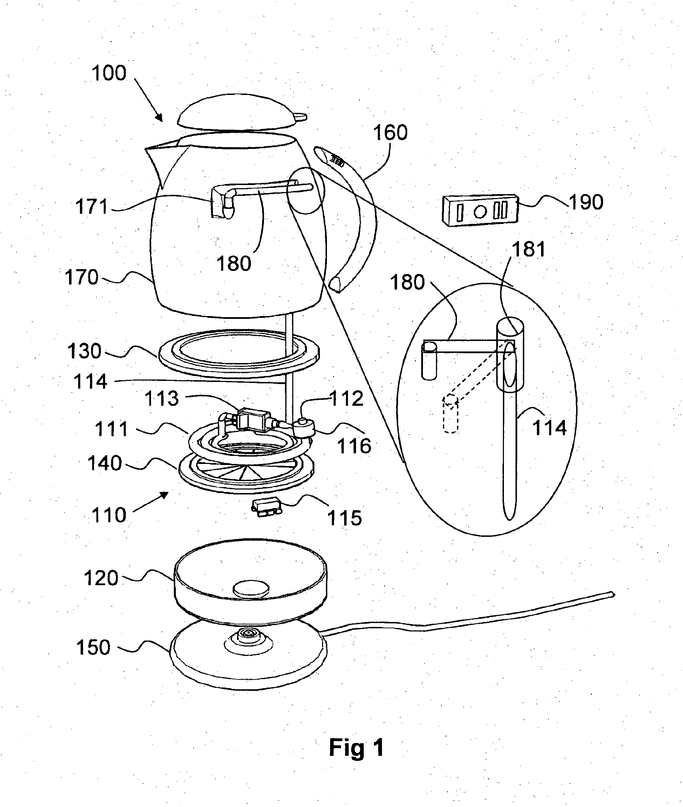

Reference is now made to Figure 1 illustrating an exploded view of a kettle provided with an adjunct steam exertion mechanism in accordance with a preferred embodiment of the present invention. Improved kettle comprises a kettle 100 capable of receiving fluid such as water and an adjunct steam mechanism 110. Steam generating mechanism 110 is essentially mounted inside a base 120 of the kettle. As mentioned herein before, steam generating mechanism 110 uses the heating element 130 of kettle 100 that is basically used as the regular water heating element of the kettle for heating water.

Optionally, steam generating mechanism 110 includes an additional heating element 140 that is dedicated to generating steam.

Steam mechanism 110 further comprises a hollow tube 111 with a preferred diameter of about 6-8 millimeters that serves to convey the steam. One side of hollow tube 111 is connected to a one way valve 116 that permits water penetration from the body of kettle 100 via opening 112 to hollow tube 111 and prevents the water from returning to the kettle. The water that enters into hollow tube 111 is heated by heating elements 140 or optionally by heating element 130. One directional pump 113 that is provided on the other end of hollow tube 111 transfers the water into tube 111 from the kettle wherein the pressure in tube 111 is increased due to water heating. Massive heating of the accumulated water in tube 111 transforms the water into steam that is pushed by pump 113 through pipe 114 that is flucidically connecting one directional pump 113 to steam spout 180.

It should be noted that most of steam generating mechanism 110 is positioned within kettle 100 while spout 180 is provided in its exterior side so as to allow its use and discharging steam through it. Spout 180 is preferably inserted within a dent 171 in the exterior portion of the kettle's body 170 so as to maintain an esthetic look of the improved kettle. Spout 180 can be removed from dent 171 when it is in use.

In an enlargement view shown in Figure 1, spout 180 is shown to have two extreme states. When the steaming mechanism is in use, the spout is ejected to position 181. Optionally, spout 180 that is inserted within dent 171 in the body of the kettle is capable of being ejected out by pushing it toward the dent using a mechanism known in the art, or optionally by any other ejection mechanism that is by no means limits the invention.

Pump 113 has a protection release valve that is provided to discharge steam from tube 111 when the pressure is too high. Pump 113 is electrically communicating to a power supply through base 150 and is capable of working in pulses.

Steam mechanism 110 is protected by a block switch thermostat 115 that provides three functions: (i) security function in which the system is disconnected from the electricity, for example, when the water is too hot, (ii) keeping water temperature in tube 111 at about 95 degrees Celsius when the kettle is in water warming state, and (iii) keeping water temperature in tube 111 at about 99 degrees Celsius when the kettle is in a state of generating steam.

A switch 190 is provided preferably on kettle handle 160, but can be provided in any other position on the kettle's body. Switch 190 provides three functions that define three states: (i) turning off steaming mechanism, (ii) turning on the heating element of the steam generating mechanism, in case the heating system has a dedicated heating element, and (iii) operating pump 113 for releasing steam (this function can be used when steam is ready which is optionally indicated by a light).

Base 150 can be electrically connected to electrical power so as to provide power in a manner known in the art.

Kettle 100 is further provided with an on/off switch for operating the kettle in a manner known in the art.

It should be noted that the steam generating mechanism of the present invention can be incorporated within other water heating systems such as coffee makers and water heating urns.

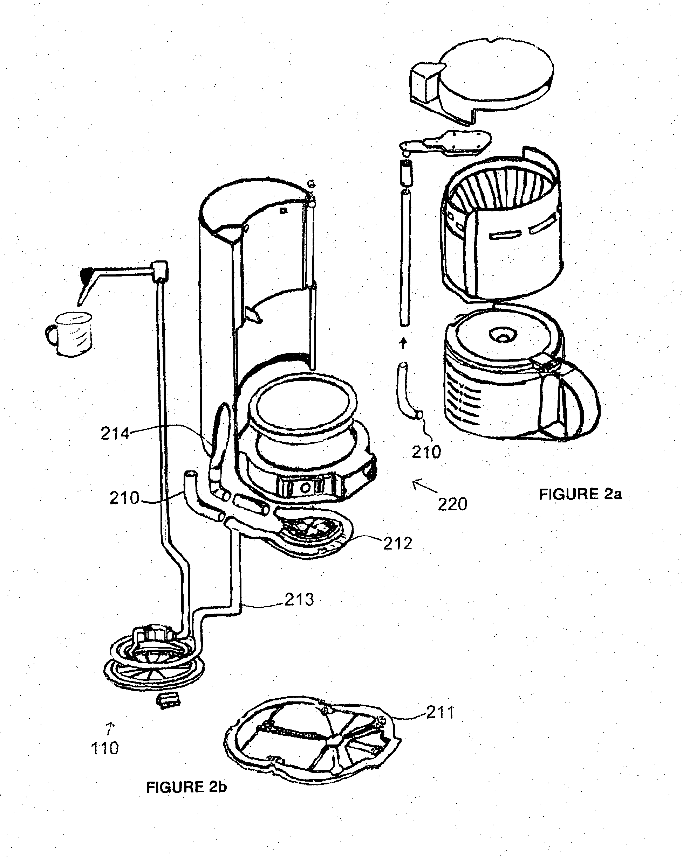

Reference is now made to Figures 2a-b illustrating an exploded view of coffee maker provided with an adjunct steam generation and exertion mechanism in accordance with a yet another embodiment of the present invention. Figure 2a illustrates parts of a coffee maker with pipe 210 being part of the pipe leading steam or hot water to the top of the coffee maker as know in the art. Figure 2b illustrating a possible integration of the adjunct steam mechanism 110 in a coffee maker. Base 211 is the regular base of the coffee maker. Pipe 212 is the pipe in which hot water is generated in the coffee maker as known in the art. Pipe 213 is connected to pipes 210 and 212 for transferring hot water from the coffee maker to steam mechanism 110. Support 220 is a heating base and a water reservoir of the coffee maker with pipe 214 transferring water from the reservoir to pipe 212.

It should be mentioned that the steam exerting mechanism of the present invention can be incorporated within a regular kettle or any other kitchenware water warming device or can be an add-on mechanism that is provided to within the water heating device in order to produce steam.

## Claims

1. A steam generating mechanism (100) incorporated within a water heating system having a body, at least one heating element (130, 140), on/off switch and power supply, the steam generating mechanism comprising:
a hollow tube (111) having a first side and a second side provided close to the at least one heating element (130, 140);
a one way valve (116); and
a one directional pump (113):
**characterised in that**
the one way valve (116) is connected to said first side and allows water to enter into said hollow tube (111);
the one directional pump (113) is connected to said second side and capable of discharging steam generated within said hollow tube (111); and
a pipe (114) is fluidically connected to said one directional pump (113) wherein said pipe (114) passes through the body for discharging said steam outwardly.

2. The steam generating mechanism as claimed in Claim 1, wherein said one directional pump (113) is provided with protection release valve.

3. The steam generating mechanism as claimed in Claim 1, wherein one of the at least one heating element (130, 140) is a dedicated heating element for the steam generated mechanism and is adjacent to said hollow tube (110).

4. The steam generating mechanism as claimed in Claim 1, wherein said pipe (114) is connected to a spout (180) for discharging steam.

5. The steam generating mechanism as claimed in Claim 4, wherein said spout (180) is connected to said pipe (114) through a hinge and wherein said spout (180) can be inserted within a dent in the body and being rotated outwardly.

6. The steam generating mechanism as claimed in Claim 1, wherein said one direction pump (113) is configured to work in pulses.

7. The steam generating mechanism as claimed in Claim 1, further comprises a protecting thermostats-based mechanism (150).

8. The steam generating mechanism as claimed in Claim 7, wherein said protecting thermostats-based mechanism (150) provides three functions:
(i) security function in which the system is disconnected from electricity,
(ii) keeping water temperature in said hollow tube (111) at about 95 degrees Celsius when the water heating system is in use, and
(iii) keeping water temperature in said hollow tube (111) at about 99 degrees Celsius.

9. The steam generating mechanism as claimed in Claim 1, further comprises at least one indicator.

10. The steam generating mechanism as claimed in Claim 9, wherein one of said at least one indicator provides a first function in which the water heating system and/or the steam generating mechanism is turned off/on and a second function in which a light indicates when steam is available in said hollow tube (111).

11. The steam generating mechanism as claimed in Claim 1, wherein the water heating system is configured as a kettle (100) for warming water, a coffee maker, or a water heating urn.

## Patentansprüche

1. Dampferzeugungsmechanismus (100), der in ein Wassererwärmungssystem integriert ist, das einen Körper aufweist, mindestens ein Heizelement (130, 140), einen Ein/AusSchalter und eine Stromversorgung, wobei der Dampferzeugungsmechanismus umfasst:
ein hohles Rohr (111) mit einer ersten Seite und einer zweiten Seite, die nahe dem mindestens einen Heizelement (130, 140) angeordnet ist;
ein Rückschlagventil (116); und
eine Einwegepumpe (113);
**dadurch gekennzeichnet, dass**
das Rückschlagventil (116) mit der ersten Seite verbunden ist und zulässt, dass Wasser in das hohle Rohr (111) gelangt;
die Einwegepumpe (113) mit der ersten Seite verbunden ist und zulässt, dass Wasser in das hohle Rohr (111) gelangt;
ein Rohr (114), das in Flüssigkeitsverbindung mit der Einwegepumpe (113) steht, wobei das Rohr (114) durch den Körper führt, um Dampf nach außen zu leiten.

2. Dampferzeugungsmechanismus nach Anspruch 1, wobei die Einwegepumpe (113) mit einem Sicherheitsventil versehen ist.

3. Dampferzeugungsmechanismus nach Anspruch 1, wobei eines der mindestens einen Heizelemente (130, 140) speziell zum Erwärmen des Dampferzeugungsmechanismus vorgesehen ist und neben dem hohlen Rohr (110) angeordnet ist.

4. Dampferzeugungsmechanismus nach Anspruch 1, wobei das Rohr (114) mit einer Auslasstülle (180) zum Ablassen von Dampf verbunden ist.

5. Dampferzeugungsmechanismus nach Anspruch 4, wobei die Auslasstülle (180) über ein Scharnier mit dem Rohr (114) verbunden ist und wobei die Auslasstülle (180) in eine Vertiefung in dem Körper eingesetzt und nach außen gedreht werden kann.

6. Dampferzeugungsmechanismus nach Anspruch 1, wobei die Einwegepumpe (113) dazu konfiguriert ist, pulsierend zu arbeiten.

7. Dampferzeugungsmechanismus nach Anspruch 1, des Weiteren umfassend einen thermostatbasierten Schutzmechanismus (150).

8. Dampferzeugungsmechanismus nach Ansrpuch 7, wobei der thermostatbasierte Schutzmechanismus (150) drei Funktionen bietet:
(i) eine Sicherheitsfunktion, bei der das System vom Strom getrennt wird,
(ii) das Halten der Wassertemperatur in dem hohlen Rohr (111) auf etwa 95 Grad Celsius, wenn sich das Wassererwärmungssystem in Verwendung befindet, und
(iii) das Halten der Wassertemperatur in dem hohlen Rohr (111) auf etwa 99 Grad Celsius.

9. Dampferzeugungsmechanismus nach Anspruch 1, des Weiteren umfassend mindestens eine Anzeige.

10. Dampferzeugungsmechanismus nach Anspruch 9, wobei die mindestens eine Anzeige eine erste Funktion bietet, bei der das Wassererwärmungssystem und/oder der Dampferzeugungsmechanismus ein/abgeschaltet werden und eine zweite Funktion, bei der eine Leuchte anzeigt, wenn Dampf in dem hohlen Rohr (111) verfügbar ist.

11. Dampferzeugungsmechanismus nach Anspruch 1, wobei das Wassererwärmungssystem als Wasserkocher (100), als Kaffeemaschine oder als Warmwasservorratsbehälter konfiguriert ist.

## Revendications

1. Mécanisme générateur de vapeur (100) incorporé dans un système de chauffage d'eau ayant un corps, au moins un élément chauffant (130, 140), un interrupteur marche/arrêt et une alimentation en courant, le mécanisme générateur de vapeur comprenant :
un tube creux (111) ayant un premier côté et un second côté prévus près de l'élément chauffant qui existe au moins (130, 140),
un clapet antiretour (116) et
une pompe unidirectionnelle (113),
**caractérisé en ce que**
le clapet antiretour (116) est relié audit premier côté et permet à l'eau d'entrer dans ledit tube creux (111),
la pompe unidirectionnelle (113) est reliée audit second côté et est capable de décharger de la vapeur générée à l'intérieur dudit tube creux (111) et
un tuyau (114) est relié par fluide à ladite pompe unidirectionnelle (113), ledit tuyau (114) traversant le corps pour décharger ladite vapeur à l'extérieur.

2. Mécanisme générateur de vapeur selon la revendication 1, ladite pompe unidirectionnelle (113) étant pourvue d'une soupape de décharge de protection.

3. Mécanisme générateur de vapeur selon la revendication 1, l'un de l'élément chauffant qui existe au moins (130, 140) étant un élément chauffant dédié pour le mécanisme générateur de vapeur et étant adjacent audit tube creux (110).

4. Mécanisme générateur de vapeur selon la revendication 1, ledit tuyau étant relié à un bec (180) pour décharger la vapeur.

5. Mécanisme générateur de vapeur selon la revendication 4, ledit bec (180) étant relié audit tuyau (114) par une articulation et ledit bec (180) pouvant être inséré à l'intérieur du corps et tournant vers l'extérieur.

6. Mécanisme générateur de vapeur selon la revendication 1, ladite pompe unidirectionnelle (113) étant configurée pour travailler en impulsions.

7. Mécanisme générateur de vapeur selon la revendication 1 comprenant de plus un mécanisme de protection à base de thermostat (150).

8. Mécanisme générateur de vapeur selon la revendication 7, ledit mécanisme de protection à base de thermostat (150) fournissant trois fonctions :
(i) une fonction de sécurité dans laquelle le système est déconnecté de l'électricité,
(ii) maintien de la température de l'eau dans ledit tube creux (111) à environ 95 degrés Celsius lorsque le système de chauffage de l'eau est en utilisation et
(iii) maintien de la température de l'eau dans ledit tube creux (111) à environ 99 degrés Celsius.

9. Mécanisme générateur de vapeur selon la revendication 1 comprenant de plus au moins un indicateur.

10. Mécanisme générateur de vapeur selon la revendication 9 dans lequel l'un de l'indicateur qui existe au moins fournit une première fonction dans laquelle le système de chauffage de l'eau et/ou le mécanisme générateur de vapeur est à l'arrêt/en marche et une seconde fonction dans laquelle une lumière indique lorsque de la vapeur est disponible dans ledit tube creux (111).

11. Mécanisme générateur de vapeur selon la revendication 1 dans lequel le système de chauffage de l'eau est configuré comme une bouilloire (100) pour chauffer de l'eau, comme une cafetière ou un récipient pour chauffer de l'eau.
